# EUROPÄISCHE PATENTANMELDUNG

(11) **EP 1 923 503 A1**
(43) Veröffentlichungstag der Anmeldung: **21.05.2008**
(21) Anmeldenummer: 07021749.2
(22) Anmeldetag: 09.11.2007
(51) Int. Cl.: D06N 7/00, B60N 3/04, B32B 27/12

(54) **Teppich, insbesondere Automatte**

(30) Priorität: 17.11.2006 DE 102006054345
(71) Anmelder: HANNS GLASS GMBH & CO. KG, 85567 Grafing (DE)
(72) Erfinder: Baumgartner, Michael, 85567 Grafing (DE)
(74) Vertreter: Haft, von Puttkamer, Berngruber

(57) **Zusammenfassung**

Die Erfindung betrifft einen Teppich, insbesondere eine Automatte mit einer Trittschicht (1) und einer daran angeordneten Unterschicht (3). Die Unterschicht (3) besteht aus einer thermoplastischen Beschichtungsmasse, der Fasern (4) derart zugemischt sind, dass sie teilweise über die freie Oberfläche (5) der Unterschicht (3) in Richtung auf einen Teppichboden eines Kraftfahrzeuges vorstehen.

## Beschreibung

Die vorliegende Erfindung betrifft einen Teppich, insbesondere eine Automatte, bestehend aus einer Unterschicht und einer Trittschicht.

Eine derartige Automatte geht aus der DE 37 08 952 A1 hervor. Dabei besteht diese Matte im Wesentlichen aus einer Unterschicht aus einem Schaumstoff- oder Gummimaterial und einer Trittschicht, die beispielsweise aus Schlingen aus natürlichen oder künstlichen Fasern besteht, die mit einer Klebeschicht verbunden sind, die die Trittschicht mit der Unterschicht verbindet. Um eine ausreichende Rutschfestigkeit der Automatte auf einem in einem Auto ausgelegten und verklebten Veloursteppichboden zu erreichen, sind an der Unterseite der Unterschicht Noppen ausgebildet, die beispielsweise durch Pressen der Unterschicht mit einem dazu vorgerichteten Werkzeug aus der Unterschicht herausgeformt sind. Diese Noppen, die unterschiedliche Formen aufweisen können, drücken sich in den Teppichboden eines Kraftfahrzeuges ein, sodass die Rutschfestigkeit der Automatte erhöht wird.

Die Aufgabe der vorliegenden Erfindung besteht darin, einen Teppich bzw. eine Automatte so auszugestalten, dass sie eine ausreichende Biegesteifigkeit besitzt und gleichzeitig eine hohe Rutschfestigkeit auf dem Teppichboden eines Kraftfahrzeuges aufweist, wobei die Automatte relativ einfach und kostengünstig herstellbar ist.

Diese Aufgabe wird durch einen Teppich bzw. eine Automatte gelöst, die die Merkmale des Patentanspruches 1 aufweist.

Der wesentliche Vorteil der vorliegenden Erfindung besteht darin, dass die aus einer thermoplastischen Beschichtungsmasse bestehende Unterschicht der Automatte so ausgestaltet ist, dass die Biegesteifigkeit der Automatte wesentlich erhöht ist. Dies wird durch die Zumischung von Fasern in die thermoplastische Beschichtungsmasse erreicht. Ein weiterer wesentlicher Vorteil der Erfindung besteht darin, dass durch die Zumischung der Fasern in die thermoplastische Beschichtungsmasse der Unterschicht gleichzeitig die Rutschfestigkeit der Automatte wesentlich erhöht wird. Dies ist darauf zurückzuführen, dass die zugemischten Fasern über die Oberfläche der thermoplastischen Beschichtungsmasse nach unten in die Richtung auf den Teppichboden des entsprechenden Kraftfahrzeuges vorragen, sodass sie in den Teppichboden zur Erhöhung der Rutschfestigkeit eintreten und sich dort quasi "verkrallen". Da die Fasern in willkürlichen Richtungen aus der Oberfläche der thermoplastischen Beschichtungsmasse austreten, wird vorteilhafterweise eine Rutschfestigkeit der Automatte auf dem Teppichboden in allen Richtungen erreicht.

Im folgenden wird die Erfindung im Zusammenhang mit den Figuren näher erläutert. Es zeigen:
Figur 1 in perspektivischer Darstellung einen Teilausschnitt aus einer erfindungsgemäßen Automatte von der Seite der Unterschicht her gesehen;
Figur 2 einen Schnitt durch die Automatte der Figur 1 entlang der Linie II-II; und
Figur 3 eine Darstellung zur Erläuterung eines Verfahrens zur Herstellung der erfindungsgemäßen Automatte.

Im Zusammenhang mit der vorliegenden Erfindung werden zur Verbesserung der Biegefestigkeit von Automatten in die thermoplastische Beschichtungsmasse der Unterschicht der Automatten Fasern eingemischt. Dabei wurde überraschenderweise herausgefunden und erkannt, dass gleichzeitig mit der Erhöhung der Biegesteifigkeit durch die Einmischung von Fasern in die thermoplastische Beschichtungsmasse eine Erhöhung der Rutschfestigkeit der Automatte in Bezug auf den Teppichboden des Kraftfahrzeuges erreicht wird. Dies ist darauf zurückzuführen, dass in die thermoplastische Beschichtungsmasse eingemischten Fasern über die dem Teppichboden zugewandte Seite der Unterschicht vorstehen, sodass sie in das Material des Teppichbodens des Kraftfahrzeuges eindringen. Umständlich herzustellende Noppen oder dergleichen sind daher zur Erhöhung der Rutschfestigkeit nicht erforderlich. Da in die Unterschicht eingemischte Fasern in willkürlichen Richtungen über die den Teppichboden des Kraftfahrzeuges zugewandte Seite der Unterschicht vorstehen, wird eine Erhöhung der Rutschfestigkeit nach allen möglichen Richtungen erreicht.

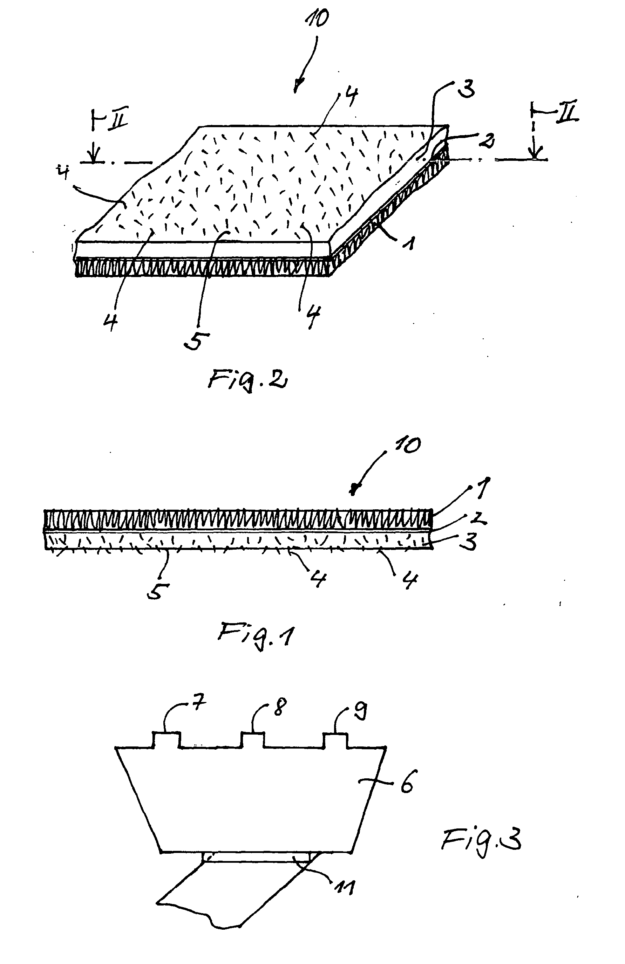

Gemäß Figur 1 besteht die vorliegende Automatte 10 im Wesentlichen aus einer an sich bekannten Teppichware 1, 2, die an einer Klebstoffschicht 2 die eigentliche Trittschicht 1 der Teppichware, beispielsweise in der Form von Schlingen aus natürlichen oder künstlichen Faserteilen aufweist. An der der Trittschicht 1 abgewandten Seite der Klebstoffschicht 2 befindet sich eine Unterschicht 3, die beim Gebrauch der Automatte 10 einem nicht dargestellten Teppichboden eines Kraftfahrzeuges zugewandt ist.

Die Unterschicht 3 besteht aus einer thermoplastischen Beschichtungsmasse, die vorzugsweise aus Polypropylen und zugemischten mineralischen Füllstoffen besteht.

Zur Erhöhung der Steifigkeit sind in die thermoplastische Beschichtungsmasse der Unterschicht 3 Fasern 4 eingemischt, die teilweise über die der Teppichware 1, 2 abgewandte Oberfläche 5 der Grundschicht 3 in Richtung auf den Teppichboden des Kraftfahrzeuges vorstehen und beim Auflegen der Automatte 10 auf den Teppichboden des Kraftfahrzeuges in diesen eindringen, sodass die Rutschfestigkeit der Automatte 10 wesentlich erhöht wird. Da die Fasern 4 nach allen möglichen Richtungen über die Oberfläche 5 willkürlich vorstehen, wird die Rutschfestigkeit in alle möglichen Richtungen der Ebene des Teppichbodens des Kraftfahrzeuges erhöht.

Von wesentlicher Bedeutung ist es, dass die zugemischten Fasern 4 eine Schmelztemperatur besitzen, die höher ist als die Schmelztemperatur der thermoplastischen Beschichtungsmasse der Unterschicht 3. Dadurch wird erreicht, dass sich bei der Herstellung der Unterschicht 3 die Fasern 4 nicht in der thermoplastischen Beschichtungsmasse der Unterschicht 3 auflösen. Ferner ist es von Bedeutung, dass bei der Herstellung der Automatte 10 die dem Teppichboden des Kraftfahrzeuges zugewandte Seite bzw. Oberfläche 5 der Unterschicht 3 nicht mit einer Walze oder dergleichen behandelt wird. Dies könnte nämlich dazu führen, dass die vorstehenden Fasern 5 in das Material der Grundschicht 3 eingewalzt und ihre Wirkung verlieren würden.

Beispielsweise beträgt die Schmelztemperatur der thermoplastischen Beschichtungsmasse der Unterschicht 3 etwa 180°C und beträgt die Schmelztemperatur der Fasern 4 etwa 200°C.

Die Länge der Fasern 4 beträgt vorzugsweise etwa mindestens 2 mm. Die Stärke der Fasern 4 beträgt vorzugsweise etwa mindestens 30 bis 40 dtex.

Vorzugsweise wird die thermoplastische Beschichtungsmasse gemäß Figur 3 mit einem Extruder 6 hergestellt, bei dem es sich vorzugsweise um einen Doppelschnecken-Extruder handelt. Dem Extruder 6 werden über einen Eingang 7 die thermoplastische Beschichtungsmasse, über einen Eingang 8 die mineralischen Füllstoffe und über einen Eingang 9 die Fasern 4 zugegeben. Am Ausgang 11 entsteht die thermoplastische Beschichtungsmasse der Unterschicht 3, die in an sich bekannter Weise über eine Rolle bzw. Walze (nicht dargestellt) auf die den Fasern der Teppichware 1, 2 abgewandte Seite aufgetragen wird, sodass die Struktur der Figuren 1 und 2 entsteht.

### Bezugszeichen

- 1: Trittschicht
- 2: Klebstoffschicht
- 3: Unterschicht
- 4: Fasern
- 5: Oberfläche
- 6: Extruder
- 7: Eingang
- 8: Eingang
- 9: Eingang
- 10: Ausgang

## Patentansprüche

1. Teppich, insbesondere Automatte mit einer Trittschicht (1) und einer daran angeordneten Unterschicht (3), **dadurch gekennzeichnet, dass** die Unterschicht (3) eine thermoplastische Beschichtungsmasse umfasst, der Fasern (4) derart zugemischt sind, dass sie teilweise über die freie Oberfläche (5) der Unterschicht (3) in Richtung auf einen Teppichboden eines Kraftfahrzeuges vorstehen.

2. Teppich nach Anspruch 1, **dadurch gekennzeichnet, dass** die Trittschicht (1) die Form einer Teppichware (1,2) aufweist, die eine Klebstoffschicht (2) umfasst, an der Schlingen aus natürlichen oder künstlichen Faserteilen befestigt sind.

3. Teppich nach Anspruch 1 oder 2, **dadurch gekennzeichnet, dass** die Beschichtungsmasse eine thermoplastische Beschichtungsmasse ist, der mineralische Füllstoffe zugemischt sind.

4. Teppich nach einem der Ansprüche 1 bis 3, **dadurch gekennzeichnet, dass** die Fasern (4) aus einem Material bestehen, das eine Schmelztemperatur besitzt, die höher ist als die Schmelztemperatur der Beschichtungsmasse.

5. Teppich nach Anspruch 4, **dadurch gekennzeichnet, dass** die Schmelztemperatur der Beschichtungsmasse bei etwa 180°C liegt.

6. Teppich nach Anspruch 4 oder 5, **dadurch gekennzeichnet, dass** die Temperatur der Fasern bei etwa 200°C liegt.

7. Teppich nach einem der Ansprüche 1 bis 6, **dadurch gekennzeichnet, dass** die Länge der Fasern mindestens 2mm beträgt.

8. Teppich nach einem der Ansprüche 1 bis 7, **dadurch gekennzeichnet, dass** die Stärke der Fasern etwa mindestens 30 - 40 dtex beträgt.

9. Teppich nach einem der Ansprüche 1 bis 8, **dadurch gekennzeichnet, dass** die Beschichtungsmasse im wesentlichen aus Polypropylen besteht, dem die Fasern und die Füllstoffe zugemischt sind.

10. Verfahren zur Herstellung eines Teppichs nach einem der Ansprüche 1 bis 9, **dadurch gekennzeichnet, dass** die Beschichtungsmasse, die mineralischen Füllstoffe und die Fasern (4) einem Extruder (6) zur Herstellung der Beschichtungsmasse zugegeben werden und dass die vom Extruder (6) erzeugte Beschichtungsmasse über eine Walze oder Rolle auf die Trittschicht aufgetragen wird.
